# EUROPEAN PATENT APPLICATION

(11) **EP 4 576 409 A1**
(43) Date of publication of application: **25.06.2025**
(21) Application number: 23889984.3
(22) Date of filing: 31.01.2023
(51) Int. Cl.: H01M 50/584

(54) **ELECTRICAL APPARATUS, BATTERY, BATTERY CELL AND ELECTRODE SHEET ASSEMBLY**

(30) Priority: 17.11.2022 CN 202223055716 U
(71) Applicant: Contemporary Amperex Technology (Hong Kong) Limited, Central (HK)
(72) Inventor: TONG, Yilong, Ningde, Fujian 352100 (CN); WEN, Shuaiwei, Ningde, Fujian 352100 (CN); LI, Zhiling, Ningde, Fujian 352100 (CN); ZHANG, Xiaoxi, Ningde, Fujian 352100 (CN)
(74) Representative: von Tietzen und Hennig, Nikolaus
(86) International application number: PCT/CN2023/074023
(87) International publication number: WO 2024/103533

(57) **Abstract**

Disclosed in the present application are an electrical apparatus, a battery, a battery cell (1) and an electrode plate assembly (10). The electrode plate assembly (10) comprises an electrode plate (100) and an insulating adhesive tape (200). The electrode plate (100) comprises an electrode plate body (110) and a tab. The main surface of the electrode plate body (110) has a first side edge (112) and a second side edge (113) that are spaced apart from each other along a predetermined spacing direction (D1). The tab is integrally formed with the electrode plate body (110) and protrudes from the first side edge (112) in the spacing direction (D1). The insulating adhesive tape (200) is to be adhered and fixed to the main surface of the electrode plate body (110) and to cover the first side edge (112). The above method can solve the problem of short circuit caused by burrs generated during a tab forming process piercing the separator (20).

## Description

### TECHNICAL FIELD

The present application relates to the technical field of battery cells, and particularly to an electrical apparatus, a battery, a battery cell and an electrode plate assembly.

### BACKGROUND

Human production and life have a huge demand for energy. As the reserves of traditional fossil energy become increasingly scarce, people are paying more and more attention to the utilization and development of electric energy. In daily life and industrial development, battery cells are used more and more widely.

The battery cell structure usually includes a positive electrode plate, a separator and a negative electrode plate which are stacked. Furthermore, a positive electrode tab and a negative electrode tab need to be provided on the positive electrode plate and the negative electrode plate. At present, the common method for preparing the tab is to integrally form the electrode plate and the tab by a process such as cutting or molding of the sheet material, and the above molding process often forms burrs on the processed edge. The burrs can easily pierce the separator after the positive electrode plate, separator and negative electrode plate are stacked, causing short circuit between the positive electrode plate and the negative electrode plate, thereby causing the battery cell to fail and even cause safety problems.

### SUMMARY OF THE INVENTION

In view of the above problems, the present application provides an electrical apparatus, a battery, a battery cell and an electrode plate assembly to solve the technical problems in the related art, capable of solving the problem of short circuit caused by burrs generated during the tab forming process piercing the separator.

A first technical solution of the present application provides an electrode plate assembly. The electrode plate assembly comprises an electrode plate and an insulating adhesive tape. The electrode plate comprises an electrode plate body and a tab. The main surface of the electrode plate body has a first side edge and a second side edge that are spaced apart from each other along a predetermined spacing direction. The tab is integrally formed with the electrode plate body and protrudes from the first side edge along the spacing direction. The insulating adhesive tape is to be adhered and fixed to the main surface of the electrode plate body and cover the first side edge. In the above solution, the insulating adhesive tape is adhered and fixed to the main surface of the electrode plate body and covers the first side edge, so that the insulating adhesive tape can wrap the burrs on the first side edge after covering the first side edge to prevent the risk of short circuit in the battery cell caused by the burrs piercing the separator. The method of providing the insulating adhesive tape is simple, reliable and low-cost, and can effectively improve the stability of the quality of the battery cell finished product and reduce the defective rate of the battery cell.

In some embodiments, the insulating adhesive tape further covers a tab root of the tab to be connected to the electrode plate body. In the above solution, there is a risk of tearing at the connection between the electrode plate body and the tab. By covering both the first side edge and the tab root with the insulating adhesive tape, the connection between the tab and the electrode plate body can be strengthened. In addition, burrs are also often formed on the edge of the tab root, posing the risk of short circuit in the battery cell caused by piercing of the separator. Covering the tab root with the insulating adhesive tape can prevent the burrs on the edge of the tab root from piercing the separator.

In some embodiments, the main surface of the electrode plate body includes an active material covered area covered by an active material and a blank area not covered by the active material, where the blank area extends along the first side edge, and the insulating adhesive tape is adhered and fixed to the blank area. In the above solution, the insulating adhesive tape is adhered and fixed to the blank area, which can improve the fixing effect for the insulating adhesive tape, while saving the amount of active material and reducing costs.

In some embodiments, part of the insulating adhesive tape extends out of the blank area along the spacing direction. In the above solution, part of the insulating adhesive tape extends out of the blank area along the spacing direction, so that the insulating adhesive tape can effectively cover the first side edge.

In some embodiments, the width of the blank area along the spacing direction is between 0.1 mm and 0.5 mm, and the width of the insulating adhesive tape along the spacing direction is between 3 mm and 5 mm. In the above solution, by setting the width of the blank area along the spacing direction to be between 0.1 mm and 0.5 mm, the utilization rate of the main surface of the electrode plate can be improved while ensuring the fixation of the insulating adhesive tape. The width of the insulating adhesive tape along the spacing direction is between 3 mm and 5 mm, which can achieve a good effect of burr blockage.

In some embodiments, the electrode plate body includes two main surfaces that are oppositely arranged, and two insulating adhesive tapes are provided, and the two insulating adhesive tapes are respectively adhered and fixed to the blank areas of the two main surfaces of the electrode plate body. In the above solution, by adhering the insulating adhesive tape to both main surfaces of the electrode plate body, burrs can be prevented from piercing the separators on both sides of the electrode plate.

In some embodiments, a through hole communicating the two main surfaces of the electrode plate body is formed in the blank area, and each insulating adhesive tape includes an adhesive layer and an insulating layer that are stacked. The adhesive layers of the two insulating adhesive tapes are respectively adhered and fixed to the blank areas of the two main surfaces of the electrode plate body, and are connected to each other via the through hole. In the above solution, the adhesive layers of the two insulating adhesive tapes can be connected or even fused via the through hole to form a riveted structure, thereby improving the bonding effect and preventing the insulating adhesive tapes from falling off easily even when soaked in the electrolyte in the battery cell.

In some embodiments, a plurality of through holes are provided. In the above solution, providing the plurality of through holes enables a plurality of riveted structures to be formed, and enables the blank area to maintain good mechanical strength.

In some embodiments, the electrode plate assembly serves as a positive electrode plate or a negative electrode plate. The burrs on the edge of the positive electrode plate or the negative electrode plate can be wrapped with the insulating adhesive tape, and the electrode plate assembly structure can be used in the positive electrode structure or the negative electrode structure of the battery cell.

A second technical solution of the present application provides a battery cell, which includes a negative electrode plate, a separator and a positive electrode plate stacked in sequence, and at least one of the positive electrode plate and the negative electrode plate is the electrode plate assembly provided by the first technical solution. In the above solution, the insulating adhesive tape is adhered and fixed to the main surface of the positive electrode plate body and covers the first side edge, so that the insulating adhesive tape can wrap the burrs on the first side edge after covering the first side edge to prevent the risk of short circuit in the battery cell caused by the burrs piercing the separator. The method of providing the insulating adhesive tape is simple, reliable and low-cost, and can effectively improve the stability of the quality of the battery cell finished product and reduce the defective rate of the battery cell.

In some embodiments, the positive electrode plate is an electrode plate assembly provided by the first technical solution, the negative electrode plate includes a negative electrode plate body and a negative electrode tab, the main surface of the negative electrode plate body has a third side edge and a fourth side edge that are spaced apart from each other along a spacing direction, and the negative electrode tab is integrally formed with the negative electrode plate body and protrudes from the third side edge along the spacing direction, where the third side edge is arranged adjacent to the first side edge, and in a plane perpendicular to the stacking direction of the negative electrode plate, the separator and the positive electrode plate, the projection of the third side edge falls within the projection of the insulating adhesive tape. In the above solution, the projection of the third side edge along the stacking direction is set to fall within the insulating adhesive tape, so that even if the burrs on the third side edge pierce the separator, they will be blocked by the insulating adhesive tape to avoid short circuit.

In some embodiments, the main surface of the negative electrode plate body includes a negative electrode active material covered area covered by the negative electrode active material, where the negative electrode active material covered area extends beyond the positive electrode active material covered area of the positive electrode plate along the spacing direction. In the above solution, the negative electrode active material covered area extends beyond the positive electrode active material covered area along the spacing direction, so that the cell energy density of the battery cell can be improved.

In some embodiments, in the spacing direction, the main surface of the negative electrode plate body is entirely covered by the negative electrode active material, and the projection of the third side edge along the stacking direction is flush with the first side edge or located outside the first side edge. In the above solution, while ensuring the cell energy density of the battery cell, the size difference between the negative electrode plate body and the positive electrode plate body in the spacing direction is effectively reduced, which facilitates miniaturization of the battery cell. Furthermore, by having the projection of the third side edge along the stacking direction flush with the first side edge, the battery cell can have a smaller size in the spacing direction. By having the projection of the third side edge along the stacking direction located outside the first side edge, the burrs on the third side edge can be kept away from the burrs on the first side edge, further reducing the risk of short circuit in the battery cell.

In some embodiments, in the spacing direction, the negative electrode active material covered area extends beyond the positive electrode active material covered area by a distance of not less than 0.1 mm. In the above solution, the negative electrode active material covered area extends beyond the positive electrode active material covered area by a distance of not less than 0.1 mm, which facilitates the negative electrode active material covered area receiving and storing sufficient positively charged ions.

A third technical solution of the present application provides a battery including a plurality of battery cells provided by the second technical solution. Through provision of a plurality of battery cells provided by the second technical solution, the battery can stably store or release energy.

A fourth technical solution of the present application provides an electrical apparatus including a battery provided by the third technical solution, the battery being used to provide electric energy. By including the battery provided by the third technical solution in the electrical apparatus, the reliability and safety of the electric energy supply of the electrical apparatus can be improved, which is beneficial to the stable operation of the electrical apparatus.

The above description is only an overview of the technical solution of the present application. In order to better understand the technical means of the present application and thus implement them according to the contents of the specification, and in order to make the aforementioned and other objectives, features and advantages of the present application more obvious and understandable, a detailed description of the present application is given hereinafter.

### DESCRIPTION OF DRAWINGS

By reading the detailed description of the preferred embodiments below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
FIG. 1 is a schematic structural diagram of a battery cell in the related art;
FIG. 2 is a schematic exploded structural diagram of a battery cell according to the present application;
FIG. 3 is a schematic structural diagram of an electrode plate assembly according to an embodiment of the present application;
FIG. 4 is a schematic structural diagram of the electrode plate shown in FIG. 3;
FIG. 5 is a schematic structural diagram of the bonding structure between the blank area and the insulating adhesive tape according to the present application;
FIG. 6 is a schematic structural diagram of a battery cell according to an embodiment of the present application; and
FIG. 7 is a schematic diagram of the structural relationship in a spacing direction of a battery cell according to an embodiment of the present application.

The accompanying drawings may not be drawn to actual scale.

Reference numerals in the detailed description of the present application are as follows:
21a-electrode terminal, 21b-end cover, 22b-shell, 23b-cell assembly;
1-battery cell, 10-electrode plate assembly, 10a-positive electrode plate, 100-electrode plate, 110-electrode plate body, 110a-positive electrode plate body, 112-first side edge, 113-second side edge, 114-active material covered area, 114a-positive electrode active material covered area, 115-blank area, 116-through hole, 120-positive electrode tab, 121-tab root, 200-insulating adhesive tape, 201-adhesive layer, 202-insulating layer, 20-separator, 30-negative electrode plate, 310-negative electrode plate body, 312-third side edge, 313-fourth side edge, 314-negative electrode active material covered area, 320-negative electrode tab, D1-spacing direction, D2-stacking direction, W1-width of the blank area along the spacing direction, W2-width of the insulating adhesive tape along the spacing direction, W3-distance by which the negative electrode active material covered area extends beyond the positive electrode active material covered area.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the descriptions of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting," "connection," "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the aforementioned terms in the embodiments of the present application can be understood according to specific situations.

Human production and life have a huge demand for energy. As the reserves of traditional fossil energy become increasingly scarce, people are paying more and more attention to the utilization and development of electric energy. In daily life and industrial development, battery cells are used more and more widely.

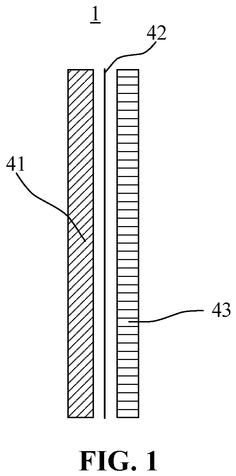

After long-term research, the inventor found that, as shown in FIG. 1, a battery cell structure often includes a positive electrode plate 41, a separator 42 and a negative electrode plate 43 that are stacked. The positive electrode plate 41 refers to an electrode plate having a high potential and containing an active material that undergoes a reduction reaction during discharge. The negative electrode plate 43 refers to an electrode plate having a high potential and containing an active material that undergoes a reduction reaction during discharge. The separator can separate the positive electrode plate 41 and the negative electrode plate 43 of the battery to prevent them from directly contacting and short-circuiting, thereby blocking current conduction and preventing the battery cell from overheating or even exploding. Furthermore, a positive electrode tab and a negative electrode tab (not shown) need to be further provided on the positive electrode plate 41 and the negative electrode plate 43. The tabs are metal conductors that lead the positive and negative electrodes out of the cell. Generally speaking, the tabs at the positive and negative electrodes of the battery are the contact points during charge and discharge. At present, the common method for preparing the tab is to integrally form the electrode plate and the tab by a process such as cutting or molding of the sheet material, and the above molding process often forms burrs on the processed edge. The burrs can easily pierce the separator 42 after the positive electrode plate 41, the separator 42 and the negative electrode plate 43 are stacked, causing short circuit between the positive electrode plate 41 and the negative electrode plate 43, thereby causing the battery cell to fail and even cause safety problems.

In order to solve this technical problem, the inventor designed an electrode plate assembly after in-depth research. The electrode plate assembly comprises an electrode plate and an insulating adhesive tape. The electrode plate comprises an electrode plate body and a tab. The main surface of the electrode plate body has a first side edge and a second side edge that are spaced apart from each other along a predetermined spacing direction. The tab is integrally formed with the electrode plate body and protrudes from the first side edge along the spacing direction. The insulating adhesive tape is to be adhered and fixed to the main surface of the electrode plate body and to cover the first side edge. The main surfaces of the electrode plate body refer to the two surfaces with the largest areas of the electrode plate body when the electrode plate is in an unfolded state. In the above solution, the insulating adhesive tape is adhered and fixed to the main surface of the electrode plate body and covers the first side edge, so that the insulating adhesive tape can wrap the burrs on the first side edge after covering the first side edge to prevent the risk of short circuit in the battery cell caused by the burrs piercing the separator. The method of providing the insulating adhesive tape is simple, reliable and low-cost, and can effectively improve the stability of the quality of the battery cell finished product and reduce the defective rate of the battery cell.

The battery cell disclosed in the embodiments of the present application can be used in an electrical apparatus that uses a battery as the power source or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and the like. Among them, the electric toy may include a stationary or mobile electric toy, for example, a game console, an electric toy car, an electric toy ship, an electric toy aircraft, or the like, and the spacecraft may include an aircraft, a rocket, a space shuttle, a spaceship, or the like.

When the electrical apparatus is a vehicle, the vehicle may be a fuel vehicle, a gas vehicle, or a new-energy vehicle, and the new-energy vehicle may be an all-electric vehicle, a hybrid electric vehicle, an extended range electric vehicle, or the like. A battery is provided inside the vehicle and may be arranged at the bottom or head or tail of the vehicle. The battery may be used to power the vehicle. For example, the battery may be used as an operating power source of the vehicle. The vehicle may further include a controller and a motor. The controller is used to control the battery to power the motor, for example, for meeting operating power demands when the vehicle is starting, navigating, and traveling.

In some embodiments of the present application, the battery may not only be used as the operating power source of the vehicle, but also as a driving power source of the vehicle to replace or partially replace fuel or natural gas to provide driving power for the vehicle.

The battery includes a box body and a battery cell accommodated in the box body. The box body is used to provide an accommodation space for the battery cell, and the box body can adopt a variety of structures. In some embodiments, the box body may include a first portion and a second portion that cover each other, and the first portion and the second portion jointly define an accommodation space for accommodating the battery cell. The second portion may be a hollow structure with one end open, and the first portion may be a plate-like structure. The first portion covers the open side of the second portion, so that the first portion and the second portion jointly define an accommodation space. The first portion and the second portion may also each be a hollow structure with one side open, and the open side of the first portion covers the open side of the second portion. Of course, the box body formed by the first portion and the second portion may be of various shapes, such as a cylinder, a cuboid, or the like.

In the battery, there may be a plurality of battery cells, and the plurality of battery cells may be connected in series or parallel or in hybrid connection. The hybrid connection means that some of the plurality of battery cells are connected in series and some are connected in parallel. The plurality of battery cells may be directly connected in series, in parallel, or in hybrid connection, and then the entirety formed by the plurality of battery cells is accommodated in the box body. Of course, the battery may also be formed by connecting the plurality of battery cells in series, in parallel, or in hybrid connection to form battery modules, and then connecting the plurality of battery modules in series, in parallel, or in hybrid connection to form an entirety, which is accommodated in the box body. The battery may further include other structures. For example, the battery may further include a busbar component for electrically connecting the plurality of battery cells to each other.

Each battery cell may be a secondary or primary battery; or it may be a lithium-sulfur battery, a sodium-ion battery or a magnesium-ion battery, but is not limited thereto. The battery cells may be cylindrical, flat, cuboid, or in other shapes.

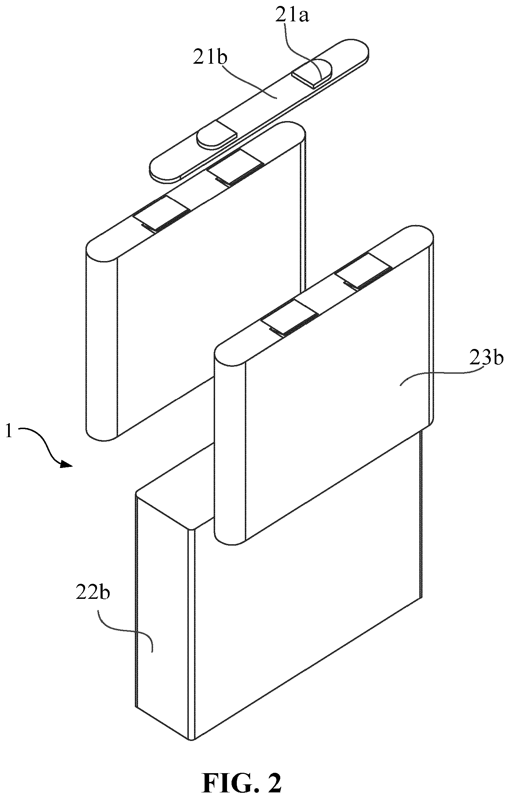

Referring to FIG. 2, FIG. 2 is a schematic exploded structural diagram of a battery cell 1 according to some embodiments of the present application. The battery cell 1 refers to the smallest unit constituting a battery. As shown in FIG. 2, the battery cell 1 includes an end cover 21b, a shell 22b, a cell assembly 23b and other functional components. The cell assembly 23b may include an electrode plate assembly.

The end cover 21b is a component that covers an opening of the shell 22b to isolate an internal environment of the battery cell 1 from an external environment. Without limitation, the shape of the end cover 21b may be adapted to that of the shell 22b so as to be mated with the shell 22b. Optionally, the end cover 21b may be made of a material (such as an aluminum alloy) with a certain hardness and strength, so that the end cover 21b is not easily deformed when being squeezed and collided, the battery cell 1 can have a higher structural strength, and the safety performance can also be improved. Functional components such as an electrode terminal 21a may be provided on the end cover 21b. The electrode terminal 21a may be used for being electrically connected to the cell assembly 23b to output or input electric energy of the battery cell 1. In some embodiments, the end cover 21b may be further provided with a pressure relief mechanism for relieving internal pressure when the internal pressure or temperature of the battery cell 1 reaches a threshold. The end cover 21b may be made of various materials, such as copper, iron, aluminum, stainless steel, an aluminum alloy, plastic, or the like. This is not particularly limited in the embodiments of the present application. In some embodiments, an insulating member may be further provided on an inner side of the end cover 21b and may be used for isolating an electrical connection component in the shell 22b from the end cover 21b, thereby reducing the risk of short circuit. For example, the insulating member may be made of plastic, rubber, and the like.

The shell 22b is an assembly for being mated with the end cover 21b to form the internal environment of the battery cell 1, where the formed internal environment can be used to accommodate the cell assembly 23b, an electrolyte and other components. The shell 22b and the end cover 21b may be separate components, an opening may be formed in the shell 22b, and at the opening, the opening is covered with the end cover 21b to form the internal environment of the battery cell 1. Without limitation, the end cover 21b and the shell 22b may alternatively be integrally formed. Specifically, the end cover 21b and the shell 22b may form a common connection surface before other components are placed into the shell. When it is necessary to encapsulate the interior of the shell 22b, the shell 22b is covered with the end cover 21b. The shell 22b may be in various shapes and sizes, such as a cuboid, a cylinder, a hexagonal prism, and the like. Specifically, the shape of the shell 22b may be determined depending on the specific shape and size of the cell assembly 23b. The shell 22b may be made of various materials, such as copper, iron, aluminum, stainless steel, an aluminum alloy, plastic, and the like, which is not particularly limited in the embodiments of the present application.

The cell assembly 23b is a component in which an electrochemical reaction occurs in the battery cell 1. One or more cell assemblies 23b may be contained within the shell 22b. The cell assembly 23b is mainly formed by winding or stacking a positive electrode plate and a negative electrode plate, and a separator is usually provided between the positive electrode plate and the negative electrode plate. Portions, with active materials, of the positive electrode plate and the negative electrode plate constitute a main body part of the cell assembly. The positive electrode tab and the negative electrode tab may be co-located at one end of the main body part or located at two ends of the main body part, respectively. In the charge and discharge process of a battery, the positive electrode active material and the negative electrode active material react with the electrolyte, and the positive electrode tab and the negative electrode tab are connected to the electrode terminals to form a current loop.

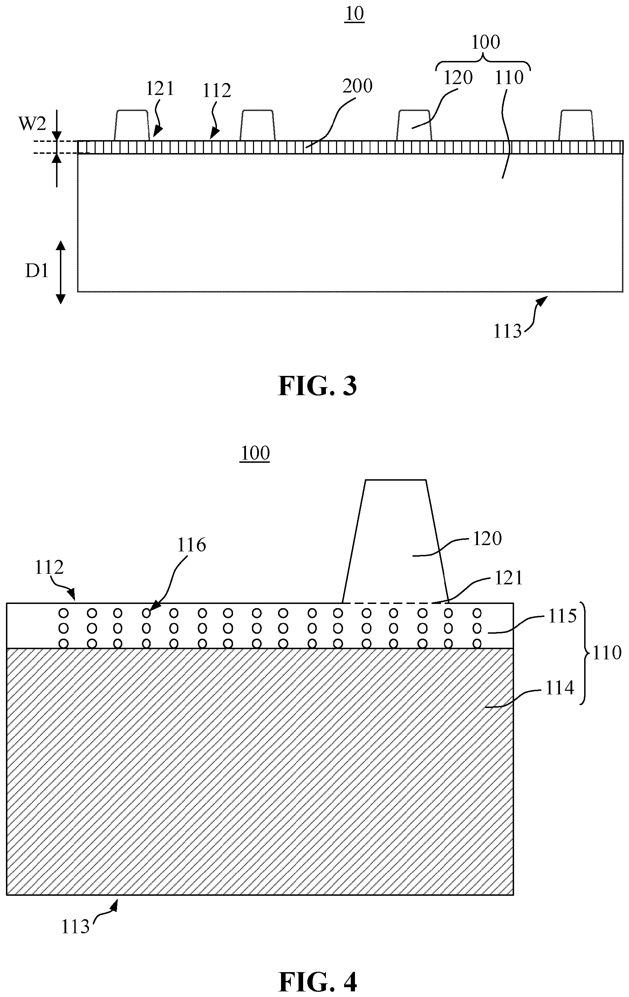

As shown in FIGS. 3 and 4, the electrode plate assembly 10 described in the electrode plate assembly according to the embodiments of the present application includes an electrode plate 100 and an insulating adhesive tape 200. The electrode plate 100 includes an electrode plate body 110 and a tab 120. The main surface of the electrode plate body 110 has a first side edge 112 and a second side edge 113 that are spaced apart from each other along a predetermined spacing direction D1. The tab 120 is integrally formed with the electrode plate body 110 and protrudes from the first side edge 112 along the spacing direction D1. The main surfaces of the electrode plate body 110 refer to the two surfaces with the largest areas of the electrode plate body 110 when the electrode plate 100 is in an unfolded state.

The electrode plate body 110 may be connected to the outside through the tab 120, and the tab 120 can serve to conduct current for the electrode plate body 110. The tab 120 extends from the first side edge 112 in a direction away from the second side edge 113. Furthermore, the first side edge 112 is interrupted at the connection between the tab 120 and the electrode plate body 110.

The insulating adhesive tape 200 is to be adhered and fixed to the main surface of the electrode plate body 110 and to cover the first side edge 112. Specifically, after the tab 120 and the electrode plate body 110 are integrally formed, burrs are often formed on the first side edge 112. The burrs have the risk of piercing the separator 20, causing short circuit in the battery cell 1. As the insulating adhesive tape 200 has a certain thickness, the insulating adhesive tape 200 can wrap the burrs after covering the first side edge 112, so as to prevent the burrs from piercing the separator 20.

Optionally, the first side edge 112 and the outer edge of the tab 120 are obtained by a die-cutting method such as laser die-cutting, and the first side edge 112 is connected to the outer edge of the tab 120. The first side edge 112 produced by die-cutting often has burrs. The insulating adhesive tape 200 can wrap the burrs after covering the first side edge 112 to prevent short circuit.

Through the electrode plate 100, the electrode plate 100 includes an electrode plate body 110 and a tab 120. The main surface of the electrode plate body 110 has a first side edge 112 and a second side edge 113 that are spaced apart from each other along a predetermined spacing direction D1. The tab 120 is integrally formed with the electrode plate body 110 and protrudes from the first side edge 112 along the spacing direction D1. The insulating adhesive tape 200 is to be adhered and fixed to the main surface of the electrode plate body 110 and to cover the first side edge 112. The insulating adhesive tape 200 can wrap the burrs of the first side edge 112 after covering the first side edge 112 to prevent the risk of short circuit in the battery cell 1 caused by the burrs piercing the separator 20. The method of providing the insulating adhesive tape 200 is simple, reliable and low-cost, and can effectively improve the stability of the quality of the battery cell 1 and reduce the defective rate of the battery cell 1.

Optionally, the insulating adhesive tape 200 further covers the tab root 121 of the tab 120 to be connected to the electrode plate body 110. The electrode plate body 110 and the tab 120 are connected at the tab root 121 of the tab 120. During the connection between the tab 120 and the outside, there is a risk that the tab 120 may be torn apart from the electrode plate body 110 at the tab root 121. The insulating adhesive tape 200 covers both the first side edge 112 and the tab root 121, so that the connection between the tab 120 and the electrode plate body 110 can be strengthened. In addition, burrs are often formed also on the edge of the tab root 121, posing the risk of short circuit in the battery cell 1 caused by piercing of the separator 20. Covering the tab root 121 with the insulating adhesive tape 200 can prevent the burrs on the edge of the tab root 121 from piercing the separator 20.

Furthermore, the first side edge 112 is interrupted at the tab root 121, and the insulating adhesive tape 200 covers both the first side edge 112 and the tab, so that the insulating adhesive tape 200 is continuous, which facilitates the adherence of the insulating adhesive tape 200.

Optionally, the main surface of the electrode plate body 110 includes an active material covered area 114 covered by an active material and a blank area 115 not covered by the active material, where the blank area 115 is arranged extending along the first side edge 112, and the insulating adhesive tape 200 is adhered and fixed to the blank area 115.

During the discharge and charge process of the battery cell 1, the active material may undergo an electrochemical reaction. Therefore, when the insulating adhesive tape 200 is being adhered, it may avoid the active material covered area 114 to avoid affecting the electrochemical reaction of the active material. Meanwhile, the active material may peel off from the active material covered area 114, which is adverse to the stable adherence of the insulating adhesive tape 200. A blank area 115 is provided on the main surface of the electrode plate body 110 to facilitate the adherence of the insulating adhesive tape 200.

Furthermore, the active material covered area 114 is disposed along the second side edge 113, and the active material covered area 114 is disposed between the blank area 115 and the second side edge 113, and the blank area 115 is disposed between the active material covered area 114 and the first side edge 112.

Optionally, part of the insulating adhesive tape 200 extends out of the blank area 115 along the spacing direction D1. Part of the insulating adhesive tape 200 extends out of the blank area 115 along the spacing direction D1, so that the insulating adhesive tape 200 can effectively cover the first side edge 112.

Optionally, a width W1 of the blank area 115 along the spacing direction D1 is between 0.1 mm and 0.5 mm, and a width W2 of the insulating adhesive tape 200 along the spacing direction D1 is between 3 mm and 5 mm. That is, 0.1 mm ≤ W1 ≤ 0.5 mm and 3 mm ≤ W2 ≤ 5 mm. Among them, setting the width W1 of the blank area 115 to be not less than 0.1 mm can effectively ensure the effect of fixing of the insulating adhesive tape 200 to the electrode plate body 110, and further setting the width W1 of the blank area 115 to be no more than 0.5 mm can fully improve the coverage rate of the main surface of the electrode plate body 110 by the active material covered area 114 while ensuring the fixing effect of the insulating adhesive tape 200, thereby ensuring the subsequent energy storage capacity of the battery cell 1.

By setting the width W2 of the insulating adhesive tape 200 to be not less than 3 mm, the insulating adhesive tape 200 can extend beyond the blank area 115 by an appropriate distance, thereby having a good blocking effect on the burrs on the tab forming edge of the electrode plate 100. Furthermore, when the electrode plate assembly 10 described below serves as a positive electrode plate to cooperate with the negative electrode plate, it can also effectively cover the tab forming edge of the negative electrode plate, further avoiding the short circuit caused by the burrs on the tab forming edge of the negative electrode plate piercing the separator. Further setting the width W2 of the insulating adhesive tape 200 to be no greater than 5 mm can save the amount of the insulating adhesive tape 200 and reduce costs.

Further, the width W1 of the blank area 115 along the spacing direction D1 may be equal to 0.1 mm, 0.2 mm, 0.3 mm or 0.5 mm, and the width W2 of the insulating adhesive tape 200 along the spacing direction D1 may be equal to 3 mm, 3.5 mm, 4 mm or 5 mm.

Optionally, the electrode plate body 110 includes two main surfaces that are oppositely arranged, and there are two insulating adhesive tapes 200, and the two insulating adhesive tapes 200 are respectively adhered and fixed to the blank areas 115 of the two main surfaces of the electrode plate body 110.

Specifically, the two main surfaces of the electrode plate 100 along its thickness direction are stacked with the separator 20 and the negative electrode plate 30 in sequence to form a stacked structure. Burrs may be generated on both main surfaces of the electrode plate body 110, so it is necessary to adhere the insulating adhesive tape 200 to both main surfaces of the electrode plate body 110 to prevent the burrs from piercing the separators 20 on both sides of the electrode plate 100.

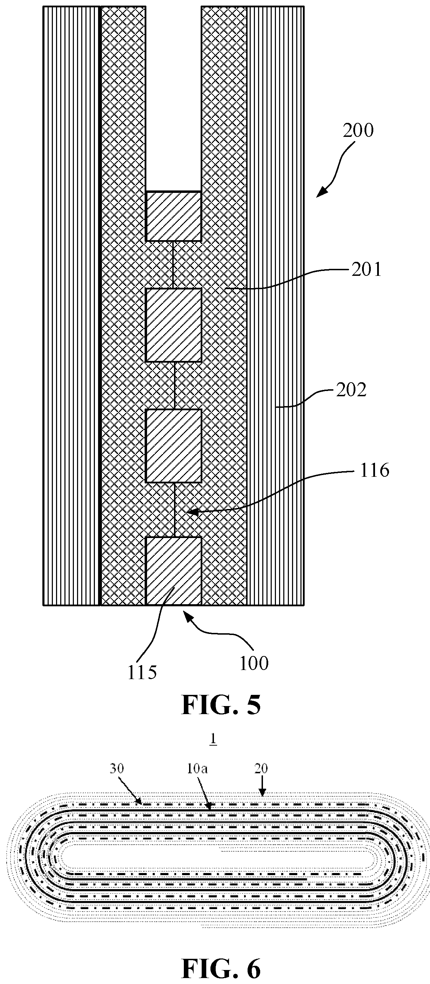

Optionally, as shown in FIGS. 4 and 5, a through hole 116 communicating the two main surfaces of the electrode plate body 110 is formed in the blank area 115, and each insulating adhesive tape 200 includes an adhesive layer 201 and an insulating layer 202 that are stacked, and the adhesive layers 201 of the two insulating adhesive tapes 200 are respectively adhered and fixed to the blank areas 115 of the two main surfaces of the electrode plate body 110, and are connected to each other via the through hole 116.

Specifically, the adhesive layer 201 has a certain plasticity, and the adhesive layers 201 of the two insulating adhesive tapes 200 can be connected or even fused via the through hole 116 to form a riveted structure, thereby improving the bonding effect and preventing the insulating adhesive tapes from falling off easily even when soaked in the electrolyte in the battery cell 1. Furthermore, the adhesive layers 201 of the two insulating adhesive tapes 200 are disposed opposite to each other on both sides of the electrode plate 100, and the portions exposed from the first side edge 112 are adhered to each other to avoid adhesion to the outside of the electrode plate 100. In addition, the provision of the through hole 116 can reduce the material consumption of the electrode plate 100.

Optionally, the sectional shape of the through hole 116 along the main surface of the electrode plate body 110 is set to be circular.

Optionally, the sectional shape of the through hole 116 along the main surface of the electrode plate body 110 is set to be rectangular.

Optionally, a plurality of through holes 116 are provided. Providing the plurality of through holes 116 enables a plurality of riveted structures to be formed, and enables the blank area 115 to maintain good mechanical strength. Furthermore, the through holes 116 are arranged in an array in the blank area 115.

Optionally, the spacing distance between the through holes 116 along the length direction of the blank area 115 is greater than the spacing distance between the through holes 116 along the width direction of the blank area 115.

Optionally, the spacing direction D1 is the width direction of the blank area 115.

Optionally, the electrode plate assembly 10 serves as the positive electrode plate or the negative electrode plate. The burrs on the edge of the positive electrode plate or the negative electrode plate can be wrapped with the insulating adhesive tape, and the electrode plate assembly 10 structure can be used in the positive electrode structure or the negative electrode structure of the battery cell 1.

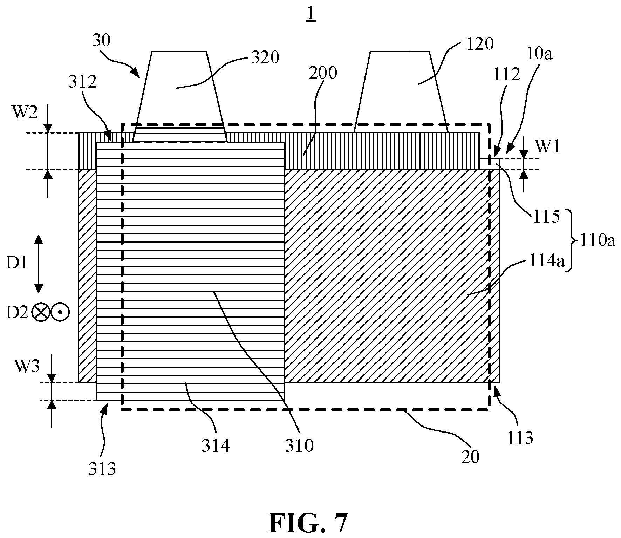

As shown in FIGS. 6 to 7, it is to be noted that in FIG. 7, some components are cut in order to show the relative positional relationship of the components. The battery cell 1 described in the embodiments of the battery cell of the present application includes a negative electrode plate 30, a separator 20 and a positive electrode plate 10a which are stacked in sequence, and at least one of the positive electrode plate 10a and the negative electrode plate 30 is an electrode plate assembly provided in the embodiments of the electrode plate assembly. Electrochemical reactions can occur at both the negative electrode plate 30 and the positive electrode plate 10a. The separator 20 is disposed between the negative electrode plate 30 and the positive electrode plate 10a to prevent the negative electrode plate 30 and the positive electrode plate 10a from contacting and causing a short circuit. The stacking of the negative electrode plate 30, the separator 20 and the positive electrode plate 10a enables the battery cell 1 to have a larger reaction area. Furthermore, the negative electrode plate 30, the separator 20 and the positive electrode plate 10a are stacked to form a wound structure. The wound structure enables the battery cell 1 to have a large reaction area while having a smaller volume and be easy to manufacture.

Optionally, the positive electrode plate 10a is an aluminum foil, and the negative electrode plate 30 is a copper foil.

Optionally, the positive electrode plate 10a is an electrode plate assembly 10 provided by the embodiment of the electrode plate assembly, the negative electrode plate 30 includes a negative electrode plate body 310 and a negative electrode tab 320, the main surface of the negative electrode plate body 310 has a third side edge 312 and a fourth side edge 313 that are spaced apart from each other along the spacing direction D1, and the negative electrode tab 320 is integrally formed with the negative electrode plate body 310 and protrudes from the third side edge 312 along the spacing direction D1, where the third side edge 312 is arranged adjacent to the first side edge 112, and in a plane perpendicular to the stacking direction of the negative electrode plate 30, the separator 20 and the positive electrode plate 10a, the projection of the third side edge 312 falls within the projection of the insulating adhesive tape 200. Further, the fourth side edge 313 is disposed adjacent to the second side edge 113.

Since the positive electrode plate 10a corresponds to the electrode plate assembly 10 provided in the embodiment of the electrode plate assembly, the positive electrode plate body 110a of the positive electrode plate 10a corresponds to the electrode plate body 110 of the electrode plate assembly 10, and the positive electrode active material covered area 114a of the positive electrode plate 10a corresponds to the active material covered area 114 of the electrode plate assembly 10.

The negative electrode plate body 310 can be connected to the outside through the negative electrode tab 320, and the negative electrode tab 320 can serve to conduct current for the negative electrode plate body 310. The negative electrode tab 320 extends from the third side edge 312 in a direction away from the fourth side edge 313. Furthermore, the third side edge 312 is interrupted at the connection between the negative electrode tab 320 and the negative electrode plate body 310.

Specifically, after the negative electrode tab 320 and the negative electrode plate body 310 are integrally formed, burrs are often formed on the first side edge 112. When the burrs pierce the separator 20 and then contact the positive electrode plate 10a, they will cause short circuit in the battery cell 1. The projection of the third side edge 312 along the stacking direction D2 falls within the insulating adhesive tape 200, and the insulating adhesive tape 200 can block the third side edge 312 from the positive electrode plate 10a to prevent the burrs on the third side edge 312 from contacting the positive electrode plate 10a and causing short circuit.

Optionally, the third side edge 312 and the outer edge of the negative electrode tab 320 are obtained by laser die-cutting, so that the third side edge 312 is connected to the outer edge of the negative electrode tab 320.

Optionally, the projection of the third side edge 312 along the stacking direction D2 is flush with the first side edge 112 or is located outside the first side edge 112.

In some embodiments, since the insulating adhesive tape 200 is adhered between the positive electrode active material covered area 114a and the first side edge 112, the projection of the third side edge 312 along the stacking direction D2 is located outside the positive electrode active material covered area 114a.

For example, the blank area 115 is provided between the positive electrode active material covered area 114a and the first side edge 112 to adhere the insulating adhesive tape 200, and the projection of the third side edge 312 along the stacking direction D2 is located outside the positive electrode active material covered area 114a.

Furthermore, the projection of the fourth side edge 313 along the stacking direction D2 is flush with the second side edge 113 or located outside the second side edge 113, so that the main surface of the negative electrode plate body 310 extends beyond the positive electrode active material covered area 114a along the spacing direction D1.

Optionally, the main surface of the negative electrode plate body 310 includes a negative electrode active material covered area 314 covered by the negative electrode active material, where the negative electrode active material covered area 314 extends beyond the positive electrode active material covered area 114a of the positive electrode plate 10a along the spacing direction D1. The negative electrode active material covered area 314 has a greater size along the spacing direction D1, which is beneficial to improving the cell energy density of the battery cell 1. For example, for positively charged ions such as lithium ions, during the discharge process, the positively charged ions can be separated from the negative electrode active material and pass through the separator into the positive electrode active material. The negative electrode active material covered area 314 has a greater size along the spacing direction D1, and can receive and store more positively charged ions.

Optionally, in the spacing direction D1, the main surface of the negative electrode plate body 310 is entirely covered by the negative electrode active material, and the projection of the third side edge 312 along the stacking direction D2 is flush with the first side edge 112 or located outside the first side edge 112. While ensuring the cell energy density of the battery cell 1, the size difference between the negative electrode plate body 310 and the positive electrode plate body 110a in the spacing direction D1 is effectively reduced, which facilitates miniaturization of the battery cell 1. The main surface of the negative electrode plate body 310 extends beyond the positive electrode active material covered area 114a along the spacing direction D1, so that the negative electrode active material covered area 314 extends beyond the positive electrode active material covered area 114a along the spacing direction D1.

In some embodiments, the projection of the third side edge 312 along the stacking direction D2 is flush with the first side edge 112, so that the battery cell 1 can have a smaller size in the spacing direction D1. In some other embodiments, the projection of the third side edge 312 along the stacking direction D2 is located outside the first side edge 112, so that the burrs on the third side edge 312 can be kept away from the burrs on the first side edge 112, further reducing the risk of short circuit in the battery cell 1.

Furthermore, the main surface of the negative electrode plate body 310 is completely covered by the negative electrode active material.

Optionally, in the spacing direction D1, the negative electrode active material covered area 314 extends beyond the positive electrode active material covered area 114a by a distance W3 of not less than 0.1 mm, that is, W3 ≥ 0.1 mm. For example, in the spacing direction D1, the negative electrode active material covered area 314 extends beyond the positive electrode active material covered area 114a by a distance of W3 that may be equal to 0.1 mm, 0.2 mm, 0.5mm or 1 mm. The negative electrode active material covered area 314 extends beyond the positive electrode active material covered area 114a by a distance W3 of not less than 0.1 mm, which facilitates the negative electrode active material covered area 314 receiving and storing sufficient positively charged ions.

An embodiment of battery of the present application provides a battery, including a plurality of battery cells 1 provided by the embodiment of battery cell. Through provision of the plurality of battery cells 1, the battery can stably store or release energy.

An embodiment of electrical apparatus of the present application provides an electrical apparatus including a battery provided by the embodiment of battery for providing electric energy. By including the battery in the electrical apparatus, the reliability and safety of the electric energy supply of the electrical apparatus can be improved, which is beneficial to the stable operation of the electrical apparatus.

To sum up, in this embodiment, the insulating adhesive tape 200 can wrap the burrs on the first side edge 112 after covering the first side edge 112 to prevent the risk of short circuit of the battery cell 1 caused by the burrs piercing the separator 20. The method of providing the insulating adhesive tape 200 is simple, reliable and low-cost, and can effectively improve the stability of the quality of the finished product of the battery cell 1 and reduce the defective rate of the battery cell 1. Meanwhile, the size of the negative electrode active material covered area 314 along the spacing direction D1 is larger than the positive electrode active material covered area 114a, which is beneficial to improving the cell energy density of the battery cell 1 and improving the energy storage capacity of the battery cell 1.

The description above is made of only embodiments of the present application and is not intended to limit the patent scope of the present application. Any variations with equivalent structure and equivalent flow made using the specification and accompanying drawings of the present application, which are directly or indirectly applied in other relevant technical fields, shall equally fall within the scope of patent protection of the present application.

## Claims

1. An electrode plate assembly, comprising:
an electrode plate comprising an electrode plate body and a tab, a main surface of the electrode plate body having a first side edge and a second side edge that are spaced apart from each other along a predetermined spacing direction, the tab being integrally formed with the electrode plate body and protruding from the first side edge along the spacing direction; and
an insulating adhesive tape to be adhered and fixed to the main surface of the electrode plate body and to cover the first side edge.

2. The electrode plate assembly according to claim 1, wherein the insulating adhesive tape further covers a tab root of the tab to be connected to the electrode plate body.

3. The electrode plate assembly according to claim 1 or 2, wherein the main surface of the electrode plate body comprises an active material covered area covered by an active material and a blank area not covered by the active material, wherein the blank area extends along the first side edge, and the insulating adhesive tape is adhered and fixed to the blank area.

4. The electrode plate assembly according to claim 3, wherein part of the insulating adhesive tape extends out of the blank area along the spacing direction.

5. The electrode plate assembly according to claim 4, wherein a width of the blank area along the spacing direction is between 0.1 mm and 0.5 mm, and a width of the insulating adhesive tape along the spacing direction is between 3 mm and 5 mm.

6. The electrode plate assembly according to any one of claims 3 to 5, wherein the electrode plate body comprises two main surfaces that are oppositely arranged, two insulating adhesive tapes are provided, and the two insulating adhesive tapes are respectively adhered and fixed to the blank areas of the two main surfaces of the electrode plate body.

7. The electrode plate assembly according to claim 6, wherein a through hole communicating the two main surfaces of the electrode plate body is formed in the blank area, each of the insulating adhesive tapes comprises an adhesive layer and an insulating layer that are stacked, and the adhesive layers of the two insulating adhesive tapes are respectively adhered and fixed to the blank areas of the two main surfaces of the electrode plate body and are connected with each other via the through hole.

8. The electrode plate assembly according to claim 7, wherein a plurality of through holes are provided.

9. The electrode plate assembly according to any one of claims 1 to 8, wherein the electrode plate assembly serves as a positive electrode plate or a negative electrode plate.

10. A battery cell comprising a negative electrode plate, a separator and a positive electrode plate stacked in sequence, wherein at least one of the positive electrode plate and the negative electrode plate is the electrode plate assembly according to any one of claims 1 to 9.

11. The battery cell according to claim 10, wherein the positive electrode plate is the electrode plate assembly according to any one of claims 1 to 9, the negative electrode plate comprises a negative electrode plate body and a negative electrode tab, a main surface of the negative electrode plate body has a third side edge and a fourth side edge that are spaced apart from each other along the spacing direction, and the negative electrode tab is integrally formed with the negative electrode plate body and protrudes from the third side edge along the spacing direction; and
wherein the third side edge is arranged adjacent to the first side edge, and in a plane perpendicular to the stacking direction of the negative electrode plate, the separator and the positive electrode plate, and a projection of the third side edge falls within a projection of the insulating adhesive tape.

12. The battery cell according to claim 11, wherein the main surface of the negative electrode plate body comprises a negative electrode active material covered area covered by a negative electrode active material, wherein the negative electrode active material covered area extends beyond the positive electrode active material covered area of the positive electrode plate along the spacing direction.

13. The battery cell according to claim 12, wherein in the spacing direction, the main surface of the negative electrode plate body is entirely covered by the negative electrode active material, and the projection of the third side edge along the stacking direction is flush with the first side edge or located outside the first side edge.

14. The battery cell according to claim 12 or 13, wherein in the spacing direction, the negative electrode active material covered area extends beyond the positive electrode active material covered area by a distance of not less than 0.1 mm.

15. A battery, comprising the battery cell according to any one of claims 10 to 14.

16. An electrical apparatus, comprising the battery according to claim 15, the battery being used for provide electric energy.
